**Europäisches Patentamt**

**European Patent Office**

**Office européen des brevets**

(19)

(11) Veröffentlichungsnummer: **0 093 203**
**B1**

(12) **EUROPÄISCHE PATENTSCHRIFT**

(45) Veröffentlichungstag der Patentschrift:
**15.01.86**

(21) Anmeldenummer: **82200496.6**

(22) Anmeldetag: **26.04.82**

(51) Int. Cl.⁴: **B 04 C 5/10,** B 01 D 29/30,
B 01 D 29/42, E 02 B 9/04

(54) **Vorrichtung zum Abscheiden fester Schmutzteilchen aus Kühlwasser für Kraftwerke u. dgl.**

(43) Veröffentlichungstag der Anmeldung:
**09.11.83 Patentblatt 83/45**

(45) Bekanntmachung des Hinweises auf die Patenterteilung:
**15.01.86 Patentblatt 86/3**

(84) Benannte Vertragsstaaten:
**AT BE CH DE FR GB IT LI LU NL SE**

(56) Entgegenhaltungen:
**DE-A-2 706 135**
**US-A-1 571 736**
**US-A-2 913 114**
**US-A-2 998 137**
**US-A-3 985 522**

(73) Patentinhaber: **Borchert, Werner, In den Blamüsen 42, D-4000 Düsseldorf 31 (DE)**

(72) Erfinder: **Borchert, Werner, Dipl.- Ing., In den Blamüsen 42, D-4000 Düsseldorf 31 (DE)**
Erfinder: **Nitsch, Klaus Dieter, Dipl.- Ing., Dietrichstrasse 26, D-4130 Moers 1 (DE)**

(74) Vertreter: **Ackmann, Günther, Dr.- Ing., Claubergstrasse 24 Postfach 10 09 22, D-4100 Duisburg 1 (DE)**

EP 0 093 203 B1

## Beschreibung

Die Erfindung betrifft eine Vorrichtung zum Abscheiden fester Schmutzteilchen aus Kühlwasser für Kraftwerke u. dgl., welche aus einer in einem Zylindergehäuse unter Bildung einer Ringkammer fest angeordneten Siebtrommel zur axialen Einleitung des schraubenförmig anströmenden Kühlwassers, einem tangential am Zylindergehäuse befestigten, mit einer Abflußöffnung versehenen Abflußrohr für das Kühlwasser und einem mit dem Innenraum der Siebtrommel verbundenen und mit einem Ventil versehenen Ableitungsrohr für die Schmutzteilchen besteht.

Zur Kühlung von Wärmetauschern in Dampfkraftwerken oder anderen Kraftwerkeinrichtungen werden große Mengen an Kühlwasser benötigt, das zur Vermeidung von Beschädigungen und Verstopfungen der Anlageteile von festen Schmutzteilchen, beispielsweise Holzstücke, Kunststoffteile, Blätter, Grashalme, Muscheln u. dgl. gereinigt werden muß. Während grobe Schmutzteile dieser Art durch vorgeschaltete Rechen zurückgehalten werden, finden zum Abscheiden feinerer Schmutzteilchen Vorrichtungen Verwendung, bei denen das Kühlwaser entweder von außen nach innen oder von innen nach außen durch eine in einem Zylindergehäuse befestigte Siebtrommel strömt. Bei einer bekannten Ausführung dieser Art wird das Kühlwasser durch Wirbelorgane, z. B. Wirbelventile oder einetangential angeströmte Vorkammer schraubenförmig beschleunigt und axial in die Siebtrommel eingeleitet. Während die Schmutzteilchen in der Siebtrommel zurückgehalten werden, strömt das Kühlwasser nach außen durch die Siebtrommel in eine Ringkammer, aus der es über ein tangential angebrachtes Abflußrohr ausströmt. Die in der Siebtrommel sich ansammelnden Schmutzteilchen werden in bestimmten Zeitabständen ausgewaschen, indem ein mit dem Innenraum der Siebtrommel verbundenes Ableitungsrohr durch ein Ventil kurzzeitig geöffnet wird. Die Funktion einer solchen Abscheidevorrichtung setzt voraus, daß die Siebtrommel an ihrem Innenmantel vom Kühlwasser mit einem spitzen Winkel angeströmt wird, damit die Schmutzteilchen durch die Tangentialkräfte von der Mantelfläche in die zentrische Wirbelsenke gespült werden und die Sieböffnungen nicht verstopfen. In der Praxis besteht jedoch der Nachteil, daß die Siebtrommel im Bereich der Abflußöffnung wesentlich stärker von Schmutzteilchen verdeckt bzw. verstopft wird als in den übrigen Umfangsbereichen. Diese Teilverstopfung bzw. -abdeckung der Siebfläche führt nicht nur zu einer erheblichen Leistungsminderung, sondern macht auch ein wesentlich häufigeres Auswaschen der Siebtrommel erforderlich.

Zum Abscheiden grober Teilchen aus der bei der Papierherstellung als Zwischenprodukt anfallenden Pülpe ist in der US-PS 1 571 736 eine in einem Gehäuse horizontal angeordnete Siebtrommel beschrieben, bei der die dickflüssige Pülpe in die Siebtrommel eingefüllt wird und die feinen Faserteilchen mittels eines Rührwerkes durch das Sieb nach außen in eine Ringkammer gepreßt werden, während die gröberen Teilchen an den Enden der Siebtrommel abgeführt werden. Da die durch die obere Hälfte der liegenden Siebtrommel hindurchgedrückte Masse auf dem Trommelmantel nach unten rutscht und dabei einen nach unten zunehmenden Gegendruck erzeugt, der die Siebleistung beeinträchtigt, sind in der oberen Hälfte auf dem Trommelmantel etagenartig mehrere Leitbleche angeordnet, die sich über die gesamte Trommellänge erstrecken und schräg nach unten weisen, so daß die nach unten rutschende Masse nach außen gelenkt wird und unterhalb der Leitbleche die Masse leichter durch die Siebtrommel nach außen gepreßt werden kann. Zum Abscheiden fester Schmutzteilchen aus Kühlwasser für Kraftwerke ist diese mit einem Rührwerk ausgerüstete Siebtrommel nicht geeignet. Das gilt auch für die aus der US-PS 3 985 522 bekannte Siebtrommel zum Abscheiden von Manganknolaus Meerwasser. Bei dieser Ausführung wird das Gemisch aus Wasser, Luft und Manganknollen spiralförmig in die lotrecht in einem Zylindergehäuse angeordnete Siebtrommel geleitet und dabei mittels eines innerhalb der Siebtrommel angeordneten schraubenförmigen Leitbleches geführt. Um die Siebtrommel herum mit Abstand angeordnete, nach unten weisende Leitringe sollen das in die Ringkammer strömende Wasser nach unten zu einem Bodenabflußrohr lenken.

Demgegenüber liegt der Erfindung die Aufgabe zugrunde, eine Vorrichtung der gattungsgemäßen Art derart auszubilden, daß der Leistungsgrad wesentlich verbessert und eine Ablagerung bzw. Teilverstopfung durch Schmutzteilchen im Bereich der Abflußöffnung verhindert wird.

Diese Aufgabe wird erfindungsgemäß dadurch gelöst, daß in der Ringkammer vor der Abflußöffnung für das Kühlwasser ein Leitblech angeordnet ist, welches mit einem Rand am Außenmantel der Siebtrommel koaxial anliegt und in Strömungsrichtung sich mt zunehmendem Abstand zur Siebtrommel über einen Teil der Siebtrommel erstreckt.

Die Anordnung des Leitbleches im Ringraum hat den wesentlichen Vorteil, daß die Druckdifferenz zwischen der Abflußöffnung und dem Innenraum der Siebtrommel gleichmäßig auf den ganzen Umfang der Siebtrommel verteilt ist und nicht mehr bevorzugt auf die der Abflußöffnung gegenüberliegende Fläche der Siebtrommel einwirkt. Es wird hierdurch eine gleichmäßige Rotationsströmung erzielt, und eine direkte Abströmung des Kühlwassers durch die Siebtrommel in die Abflußöffnung wird somit verhindert.

Die Ausbildung und Anordnung des Leitbleches kann je nach den

Betriebsbedingungen und Strömungsverhältnissen verschieden sein, wobei, es sich über etwa 1/3 bis 2/3 des Umfanges der Siebtrommel erstrecken kann; bevorzugt erstreckt es sich über etwa den halben Umfang der Siebtrommel. Zur Erzielung besonders günstiger Strömungsverhältnisse und eines hohen Wirkungsgrades entspricht der Winkel zwischen dem Leitblech und dem Außenmantel der Siebtrommel zweckmäßig etwa dem Anströmwinkel des Kühlwassers am Innenmantel der Siebtrommel.

Die günstige Verteilung der Druckverhältnisse läßt sich weiterhin dadurch optimieren, daß die Siebtrommel exzentrisch im Zylindergehäuse angeordnet ist, wobei der geringste radiale Abstand zwischen beiden Bauteilen auf der Seite liegt, wo sich der freie Rand des leitbleches befindet.

In der Zeichnung ist die Erfindung in einem Ausführungsbeispiel dargestellt; es zeigt:

Fig. 1 eine Vorrichtung zum Abscheiden fester Schmutzteilchen aus Kühlwasser in einem Grundriß,

Fig. 2 den Gegenstand der Fig. 1 in einer seitlichen Ansicht, teilweise geschnitten,

Fig. 3 den Gegenstand der Fig. 2 in einem mittleren Querschnitt im Bereich der Siebtrommel und des Abflußrohres und

Fig. 4 das Blockschaltbild einer Kühlwasseranlage mit der in den Fig. 1 bis 5 dargestellten Vorrichtung.

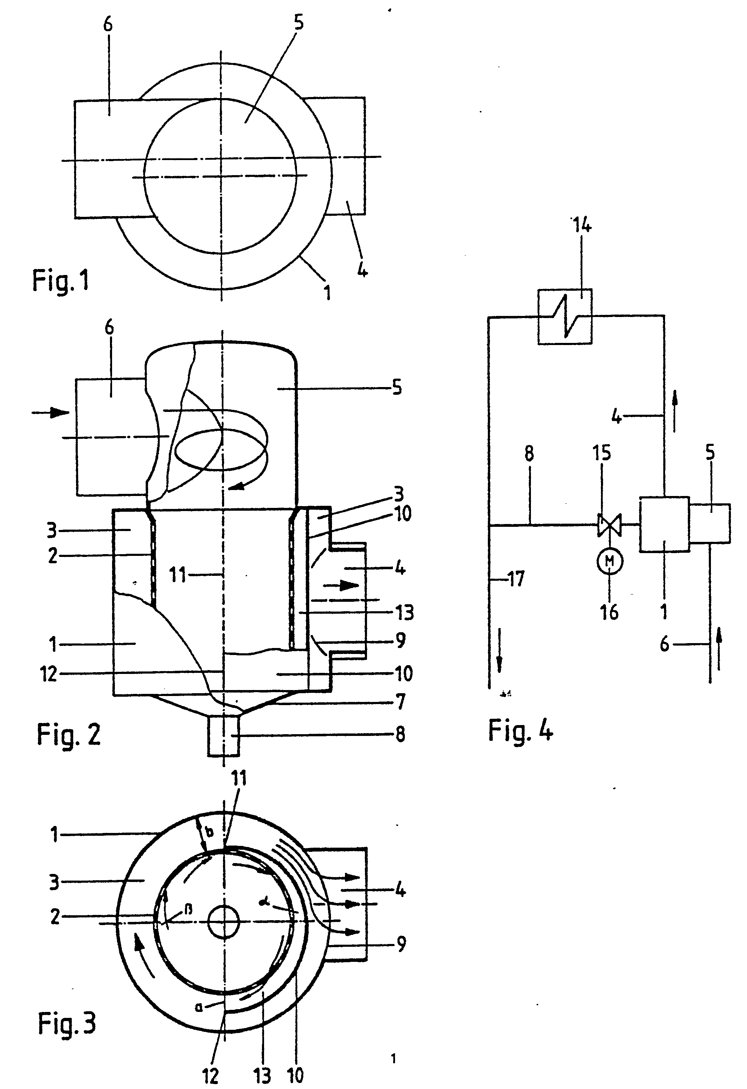

Das in den Fig. 1 bis 3 dargestellte Ausführungsbeispiel einer Vorrichtung zum Abscheiden fester Schmutzteilchen aus Kühlwasser besteht im wesentlichen aus einem Zylindergehäuse 1, in dem axial eine Siebtrommel 2 derart angeordnet ist, daß zwischen beiden Bauteilen eine Ringkammer 5 gebildet wird. Die Siebtrommel kann beispielsweise einen Lochanteil von 40 % aufweisen. Ein Abflußrohr 4 ist am Zylindergehäuse derart angebracht, daß es zur Mittelachse seitlich versetzt ist und eine tangentiale Ausstromung gewährleistet. Am Einlaufende der Siebtrommel 1 ist ein zylinderförmiger Dom 5 angebracht, der mit einem tangential verlaufenden Zuflußrohr 6 versehen ist. Bei der in der Zeichnung dargestellten Ausführung strömt das Kühlwasser durch das Zuflußrohr 6 in den Dom 5 ein und erfährt dort eine schraubenförmige Rotationsbewegung, so daß es schraubenförmig in den Innenraum der Siebtrommel 2 einströmt. Im Boden 7 des Zylindergehäuses 1 ist ein Ableitungsrohr 8 angebracht, welches mit einem weiter unten näher erläuterten Ventil 15 ausgerüstet ist.

Vor der Abflußöffnung 9 des Abflußrohres 4 ist erfindungsgemäß ein Leitblech 10 angeordnet, welches halbkreisförmig ausgebildet ist und mit einem Rand 11 am Außenmantel der Siebtrommel 2 anliegt, während der andere Rand 12 in Strömungsrichtung einen zunehmenden Abstand zur Siebtrommel aufweist. Hierdurch wird zwischen Siebtrommel 2 und Leitblech 10 ein im Grundriß sichelförmiger Zwischenraum gebildet. Der Winkel α zwischen dem Leitblech 10 und der Siebtrommel 2 soll vorzugsweise dem Anströmwinkel β des Kühlwassers entsprechen, mit dem das Kühlwasser am Innenmantel der Siebtrommel 2 anströmt. Beim Ausführungsbeispiel hat das Leitblech 10 einen halbkreisförmigen Querschnitt und erstreckt sich über den halben Umfang der Siebtrommel 2. Der in Strömungsrichtung liegende freie Rand 12 hat zur Siebtrommel 2 einen Abstand a, der vorzugsweise dem halben Abstand b zwischen Siebtrommel 2 und Zylindergehäuse 1 entspricht.

In Abwandlung der dargestellten Ausführung kann das Leitblech 10 auch einen kleineren oder größeren Bereich der Siebtrommel 2 umfassen. Wesentlich ist allein, daß das Leitblech 10 die Siebtrommel 2 gegenüber der Abflußöffnung 9 verblendet und die vorgenannten strömungsgünstigen Eigenschaften aufweist.

Das mit Schmutzteilchen versetzte Kühlwasser gelangt während des normalen Reinigungsbetriebes durch das Zuflußrohr 6 in den Dom 5, wird dort in eine Rotationsbewegung gebracht und strömt schraubenförmig axial in die Siebtrommel 2 ein. Dort strömt es den Innenmantel der Siebtrommel 2 mit dem Winkel β an. Während das Wasser durch die Siebtrommel 2 strömt, werden Schmutzteilchen zurückgehalten und infolge der Rotationsströmung von der Innenmantelfläche in die axiale Wirbelsenke geströmt. Durch die Anordnung des Leitbleches 10 kann sich der an der Abflußöffnung 9 herrschende niedrigere Druck nicht unmittelbar auf die gegenüberliegende Fläche der Siebtrommel auswirken. Vielmehr gelangt in diesem Bereich das Kühlwasser in dem im Grundriß sichelförmigen Zwischenraum 13.

Zur Entleerung des mit Schmutzteilchen angefüllten Innenraumes der Siebtrommel 2 wird das dem Abflußrohr 8 zugeordnete Ventil 15 (vgl. auch Fig. 4) geöffnet und kurzzeitig ein Spülvorgang vorgenommen. Nach dem Schließen dieses Ventiles 15 erfolgt wieder der normale Separationsvorgang.

In Fig. 4 ist eine Kühlwasseranlage in einem Blockschaltbild gezeigt. Dieses Blockschaltbild läßt erkennen, daß das das Abflußrohr 4 verlassende Kühlwasser durch einen Wärmetauscher 14 eines Wärmekraftwerkes o. dgl. geführt wird. Die Abflußleitung ist mit 17 bezeichnet. Das dem Ableitungsrohr 8 zugeordnete Ventil 15 wird durch einen Stellmotor 15 gesteuert, wobei dieser Stellmotor 15 beispielsweise durch eine Druckdifferenzmessung zwischen dem Zuflußrohr 6 und dem Abflußrohr 4 gesteuert wird. Vom Ventil 15 kann das die Schmutzteilchen auswaschende Wasser unter Umgehung des Wärmetauschers 14 unmittelbar in die Abflußleitung 17 geleitet werden.

In Abwandlung des in den Fig. 1 bis 3 gezeigten Ausführungsbeispiels kann das Leitblech sich auch nur über 1/3 oder 2/5 des Umfanges der Siebtrommel erstrecken.

Entsprechend würde dann der Abstand a angepaßt sein. Je nach Größe und Lage der Vorrichtung kann das Ableitungsrohr 8 auch seitlich am Zylindergehäuse 1 angeordnet und tangential an die Siebtrommel 2 angeschlossen sein.

**Patentansprüche**

1) Vorrichtung zum Abscheiden fester Schmutzteilchen aus Kühlwasser für Kraftwerke u. dgl., bestehend aus einer in einem Zylindergehäuse (1) unter Bildung einer Ringkammer (3) fest angeordneten Siebtrommel (2) zur axialen Einleitung des schraubenförmig anströmenden Kühlwassers, einem tangential am Zylindergehäuse (1) befestigten, mit einer Abflußöffnung (9) versehenen Abflußrohr (4) für das Kühlwasser und einem mit dem Innenraum der Siebtrommel (2) verbundenen und mit einem Ventil (15) versehenen Ableitungsrohr (8) für die Schmutzteilchen, dadurch gekennzeichnet, daß in der Ringkammer (3) vor der Abflußöffnung (9) für das Kühlwasser ein Leitblech (10) angeordnet ist, welches mit einem Rand (11) am Außenmantel der Siebtrommel (2) koaxial anliegt und in Strömungsrichtung sich mit zunehmendem Abstand zur Siebtrommel (2) über einen Teilumfang der Siebtrommel (2) erstreckt.

2. Vorrichtung nach Anspruch 1, dadurch gekennzeichnet, daß das Leitblech (10) sich über etwa 1/3 bis 2/3 des Umfangs der Siebtrommel (2) erstreckt.

3. Vorrichtung nach Anspruch 2, dadurch gekennzeichent, daß das Leitblech (10) sich über etwa den halben Umfang der Siebtrommel (2) erstreckt.

4. Vorrichtung nach einem der Ansprüche 1 bis 5, dadurch gekennzeichnet, daß der Winkel α zwischen dem Leitblech (10) und dem Außenmantel der Siebtrommel (2) etwa dem Anströmwinkel β des Kühlwassers am Innenmantel der Siebtrommel (2) entspricht.

5. Vorrichtung nach einem der Ansprüche 1 bis 4, dadurch gekennzeichnet, daß die Siebtrommel (2) exzentrisch im Zylindergehäuse (1) angeordnet ist, wobei der geringste radiale Abstand zwischen beiden Bauteilen auf der Seite liegt, wo sich der freie Rand (12) des Leitbleches (10) befindet.

**Claims**

1. An installation for the removal of solid impurities from cooling water for power stations and the like, consisting of a screening drum (2) fixed in a cylindrical casing (1) so as to form an annular chamber (3) and intended for axial introduction of the helically incoming cooling water, a cooling water outflow tube (4) secured tangentially to the cylindrical casing (1) and having an outflow aperture (9), and an impurities discharge pipe (8) connected to the interior of the screening drum (2) and provided with a valve (15), characterised in that a baffle plate (10) is disposed in the annular chamber (3) in front of the cooling water outflow aperture (9) and bears coxially by an edge (11) against the outer casing of the screening drum (2) and extends over part of the circumference thereof in the direction of flow at an increasing distance from the drum (2).

2. An installation according to claim 1, characterised in that the baffle plate (10) extends over approximately one-third to two-thirds of the circumference of the screening drum (2).

3. An installation according to claim 2, characterised in that the baffle plate (10) extends over approximately half the circumference of the screening drum (2).

4. An installation according to any one of claims 1 to 3, characterised in that the angle (α) between the baffle plate (10) and the outer casing of the screening drum (2) corresponds approximately to the angle (β) of entry of the cooling water to the inner casing of the screening drum (2).

5. An installation according to any one of cleims 1 to 4, characterised in that the screening drum (2) is disposed eccentrically in the cylindrical casing (1), the minimum radial distance between the two structural parts being on that side where the free edge (12) of the baffle plate (10) is located.

**Revendications**

1. Dispositif pour séparer des particules de saletés solides de l'eau de refroidissement de centrales électriques et analogues, constitué par un tambour de filtrage (2) monté fixe dans un carter cylindrique (1) moyennant la formation d'une chambre annulaire (3), de manière à permettre la pénétration axiale de l'eau de refroidissement circulant selon un écoulement hélicoïdal, un tube (4) d'évacuation de l'eau de refroidissement fixé tangentiellement sur le carter cylindrique (1) et comportant une ouverture d'évacuation (9), et un tube (8) d'évacuation des particules de saletés, relié à l'espace intérieur du tambour de filtrage (2) et comportant une vanne (15), caractérisé par le fait que dans la chambre annulaire (3) se trouve disposée en amont de l'ouverture (9) de sortie du liquide de l'eau de refroidissement, une chicane (10) qui est appliquée coaxialement, par son bord (11), contre l'enveloppe extérieure du tambour de filtrage (2) et s'étend, suivant la direction d'écoulement, à une distance croissante du tambour de filtrage (2), sur une partie de la périphérie du tambour.

2. Dispositif suivant la revendication 1, caractérisé par le fait que la chicane (10) s'étend approximativement sur environ 1/3 à 2/3 de la périphérie du tambour de filtrage (2).

3. Dispositif suivant la revendication 2, caractérisé par le fait que la chicane (10) s'étend sur environ la moitié de la périphérie du tambour de filtrage (2).

4. Dispositif suivant l'une des revendications 1 à 3, caractérisé par le fait que l'angle α entre la chicane (10) et l'enveloppe extérieure du tambour de filtrage (2) correspond approximativement à l'angle β d'incidence de l'écoulement d'eau de refroidissement sur l'enveloppe intérieure du tambour de filtrage (2).

5. Dispositif suivant l'une des revendications 2 à 4, caractérisé par le fait que le tambour de filtrage (2) est monté en étant excentré dans le carter cylindrique (1), la distance radiale minimum entre les deux composants étant présente sur le côté où est situé le bord libre (12) de la chicane (10).

0 093 203

Fig. 1

Fig. 2

Fig. 3

Fig. 4